# EUROPEAN PATENT APPLICATION

(11) **EP 2 455 405 A2**
(43) Date of publication of application: **23.05.2012**
(21) Application number: 10799985.6
(22) Date of filing: 02.07.2010
(51) Int. Cl.: C08F 2/44, C08F 20/00, C08K 7/18, C08L 33/00

(54) **METHOD FOR PREPARING A SUPERABSORBENT POLYMER**

(30) Priority: 15.07.2009 KR 20090064310
(71) Applicant: LG Chem, Ltd., Youngdungpo-gu Seoul 150-721 (KR)
(72) Inventor: KIM, Gi-Cheul, Daejeon 305-340 (KR); LEE, Sang-Gi, Daejeon 305-728 (KR); KIM, Kyu-Pal, Busan 609-310 (KR); WON, Tae-Young, Busan 609-320 (KR); HAN, Chang-Sun, Daejeon 305-720 (KR)
(74) Representative: Goddar, Heinz J.
(86) International application number: PCT/KR2010/004330
(87) International publication number: WO 2011/007974

(57) **Abstract**

The present invention relates to a process for preparing super absorbent polymers, and more specifically to a process for preparing super absorbent polymers comprising the steps of: forming a monomer composition comprising water-soluble, ethylenic unsaturated monomers and non-reactive fine particles having a diameter of 20nm to 1 mm; and subjecting the monomer composition to a thermal polymerization or a UV-induced polymerization.

In the present invention, introducing fine particles into the monomer composition can provide paths for effectively discharging moisture or heat from the super absorbent polymers during or after a polymerization, thereby making it possible to obtain high quality super absorbent polymers showing a low water content and a low temperature and thus having excellent properties and enabling one to expect an energy-saving effect in a drying process.

## Description

### FIELD OF THE INVENTION

The present invention relates to a process for preparing super absorbent polymers, and more specifically, to a process for preparing super absorbent polymers, wherein facilitating effective discharge of moisture or heat from super absorbent polymers makes it possible to produce high quality super absorbent polymers showing a low moisture content and a low temperature and to save time and energy necessary for a final drying, thereby increasing the overall efficiency of the preparation process of super absorbent polymers.

### BACKGROUND OF THE ART

A super absorbent polymer (SAP) is a type of synthetic polymeric materials capable of absorbing moisture from 500 to 1000 times its own weight. Various manufacturers have been denominated it as different names such as "Super Absorbency Material (SAM)" or "Absorbent Gel Material (AGM)." Since such super absorbent polymers started to be practically applied in sanitary products, now they have been widely used not only for hygiene products such as disposable diapers for children, but also for water retaining soil products for gardening, water stop materials for the civil engineering and construction, sheets for raising seedling, fresh-keeping agents for food distribution fields, and materials for poultice and the like.

As a preparation process for such super absorbent polymers, a process using a reverse phase suspension polymerization and a process using a solution polymerization have been known in the art. For example, Japanese Patent Laid-open Publication Nos. S56-161408, S57-158209, S57-198714 disclosed the reverse phase suspension polymerization. The process using the solution polymerization as disclosed in the art includes a thermal polymerization method wherein a polymerization gel is polymerized while being broken and cooling in a kneader equipped with a shaft, and a photo-polymerization method wherein an aqueous solution with a high concentration is irradiated with UV rays or the like onto a belt to be polymerized and dried at the same time.

Moreover, Japanese Patent Laid-open Publication No. 2004-250689 disclosed a method of producing a water-absorptive molded product wherein an aqueous solution comprising a photoinitiator and water-soluble ethylenic unsaturated monomers is irradiated discontinuously with light to undergo a polymerization. In addition, Korean Patent No. 0330127 disclosed a preparation process for absorbent polymers wherein water soluble ethylenic unsaturated monomers are polymerized by irradiating them with UV radiation in the presence of a radical photoinitiator having a benzoyl group and peroxides.

Hydrogel polymers as obtained from the above polymerization are typically subjected to a drying process and then grinded into a powdery form to be commercially available as a super absorbent polymer product.

In this connection, when the hydrogel polymer as obtained by conventional polymerization methods are subjected to a drying and a grinding to be prepared as a super absorbent polymer, the surface of the hydrogel polymer obtained after the polymerization becomes harder to form a solid surface layer, and this causes a problem that moisture or heat in the polymers cannot be easily discharged. As a result, according to the conventional methods, super absorbent polymers with a low level of moisture content was difficult to prepare and their drying process was not easy to proceed, as well. Furthermore, raising the drying temperature in an attempt to lower the water content can lead to an increase in the temperature of the hydrogel polymers and the super absorbent polymers such that it has a detrimental effect on the polymer properties. Even if it brought about no increase in the temperature, a long-time drying would be necessary for a desired level of the water content to be achieved and this would hamper an efficient drying process.

### DETAILED DESCRIPTION OF THE INVENTION

### TECHNICAL OBJECTIVES

The present invention is to provide a process for preparing super absorbent polymers wherein facilitating effective discharge of moisture or heat in super absorbent polymers makes it possible to produce super absorbent polymers showing a low water content and a low temperature, and whereby one can expect an energy saving effect in a drying process.

Further, the present invention makes it possible to improve centrifugal retention capacity (CRC), which is a basic water absorbing ability, together with absorption under pressure (AUP), thereby providing a method that can prepare super absorbent polymers with more enhanced properties,

### TECHNICAL SOLUTIONS

The present invention provides a process for preparing super absorbent polymers, which includes the steps of forming a monomer composition comprising water-soluble, ethylenic unsaturated monomers and non-reactive fine particles with a diameter of 20nm to 1 mm; and subjecting the monomer composition to a thermal polymerization or a UV-induced polymerization.

Hereinafter, the preparation process for super absorbent polymers according to specific embodiments of the present invention will be explained.

The present invention relates to a process for preparing super absorbent polymers with excellent properties, wherein super absorbent polymers with a low level of residual moisture content and a low temperature can be prepared easily and effectively. Furthermore, thanks to the lowered moisture content in the resulting polymers, the present invention can provide an energy saving effect in a drying process.

In particular, the super absorbent polymers prepared by the process according to the present invention are **characterized in that** they are superior not only in the centrifugal retention capacity (CRC), which is basically a practical moisture absorbing ability, but also in the absorption under pressure (AUP). Super absorbent polymers can be generally evaluated to have excellent properties when they have a higher centrifugal retention capacity and a higher AUP at the same time. Typically, however, the centrifugal retention capacity and the AUP are inversely proportional to each other such that it is difficult to enhance both properties at the same time. This is because the centrifugal retention capacity is related to an ability of the super absorbent polymer to absorb water with ease between the molecular structure thereof, while the AUP is associated with an ability of the super absorbent polymer to absorb water well with expanding its volume even under an external force thanks to a dense and strong molecular structure thereof.

However, according to the process of the present invention, the super absorbent polymers can be prepared to have a high degree of the polymerization and a strong molecular structure so that their AUP can be enhanced, while moisture can be effectively discharged during the polymerization and thereby basic properties of the super absorbent polymers including the centrifugal retention capacity can be further improved. Accordingly, through the process of the present invention and the energy saving effect therefrom, super absorbent polymers with excellent properties can be obtained economically.

An embodiment of the present invention provides a process for preparing super absorbent polymers, which includes the steps of forming a monomer composition comprising water-soluble, ethylenic unsaturated monomers and non-reactive fine particles with a diameter of 20nm to 1 mm; and subjecting the monomer composition to a thermal polymerization or a UV-induced polymerization..

According to the present invention, non-reactive fine particles are introduced into the monomer composition comprising the monomers, making it possible to provide paths for effectively taking away the residual moisture in the polymeric resins during or after the polymerization.

In other words, the process of the present invention is mainly **characterized in that** the non-reactive fine particles with a predetermined size are introduced into the monomer composition, which is then polymerized and dried to produce super absorbent polymers. According to such preparation process, during or after the formation of the super absorbent polymers through the polymerization, the fine particles lead to a formation of paths for discharging moisture and heat, allowing the moisture or the heat to be easily discharged from the super absorbent polymers. In this connection, the diameter of the non-reactive fine particles can be about 20nm - 1 mm, preferably about 30nm - 0.5mm, more preferably about 30nm - 100µm, and most preferably about 30nm - 200nm. Using a non-reactive fine particle with too small diameter, for example, less than about 20nm, cannot facilitate discharge of moisture that occurs at the surface between the fine particles and the super absorbent polymers. If the diameter exceeds about 1 mm, the particles are larger than the super absorbent polymers, disadvantageously having only a little effect on removal of heat in the polymers.

In this connection, the non-reactive fine particles simply mixed with the resulting super absorbent polymers without being used in the polymerization step are undesirable because in such case, the super absorbent polymers still contain a lot of moisture and thus need to be dried at a high temperature and further, the fine particles tend to be separated from the super absorbent polymers.

The term "non-reactive fine particle" used herein refers to a particle that neither reacts with any monomer nor takes part in any polymerization reaction.

The non-reactive fine particles used in the present invention can comprise nanoclay particles, polymer particles, or inorganic particles.

As the nanoclay particles, one can use any typical clay compounds, which may be swellable or non-swellable clay, and their type is not particularly limited. As the swellable clay, which is a laminar organic material with a water-absorbing power, one can use montmorilonite (MMT), saponite, nontronite, laponite, beidellite, hectorite, vermiculite, magadiite, or the like. As the non-swellable clay, one can use kaolin, serpentine, mica minerals, or the like.

As the polymer particles, one can use typical linear polymers, super absorbent polymers or the like as grinded into a fine particle. For example, one can use at least one polymer particle selected from the group consisting of fine particles obtained from the steps of a polymerization, a drying, a grinding, and distribution; fine particles obtained from surface crosslinking carried out after the grinding of the polymers; and fine particles obtained from a post-treatment of the grinding and the distribution carried out after surface crosslinking. The average diameter of the polymer fine particles can be about 150µm or less, preferably from about 10µm to 120µm, and most preferably from about 50µm to 100µm.

As the inorganic particles, one can use at least one amorphous inorganic material selected from the group consisting of silicon oxide, aluminum oxide, magnesium oxide, and their derivatives.

Also, the non-reactive fine particles can be used in an amount of about 0.1 to 10% by weight, preferably about 0.3 to 8% by weight, more preferably about 0.3 to 5% by weight, and most preferably about 0.4 to 3% by weight with respect to the total monomer composition. When the content of the non-reactive fine particles is less than about 0.1% by weight, they have only an insignificant effect on improving drying efficiency. When the content exceeds about 10% by weight, they can cause deterioration of the properties.

Furthermore, according to the present invention, hydrogel polymers with micro-paths formed therein can be obtained by subjecting the monomer composition to a thermal polymerization or a UV-induced polymerization.

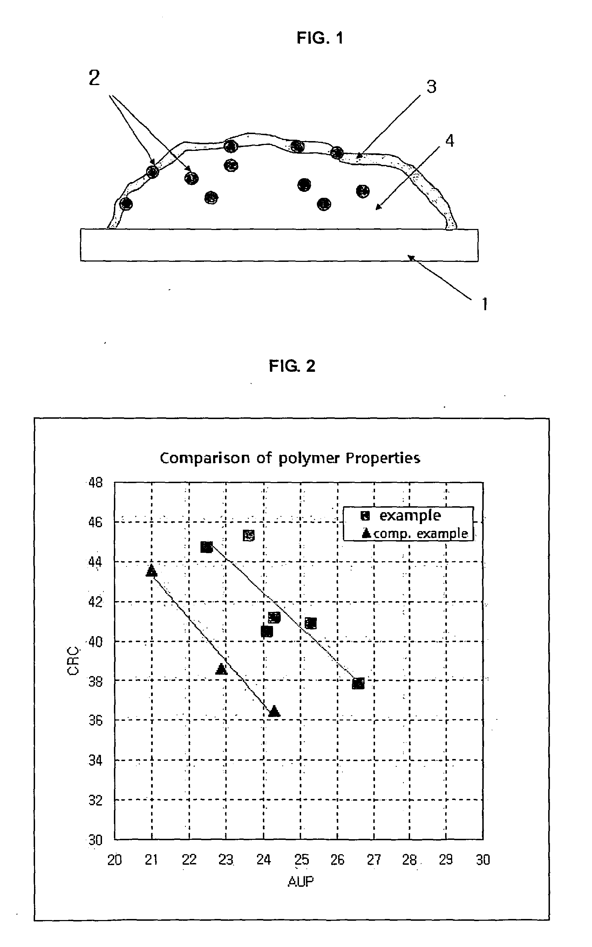

FIG. 1 is a view schematically illustrating the formation of micro-paths in the polymer via the polymerization process in the preparation process for super absorbent polymers according to the present invention.

As shown in FIG. 1, the hydrogel polymer obtained from the polymerization comprises a solid polymer layer 3, micro-paths 2 for discharging moisture and heat therein, and a polymer layer with a relatively high water content 4. The micro-paths can be formed on the surface layer, as well. The average diameter of the micro-paths 2 in the hydrogel polymer is not particularly limited, but preferably, the micro-paths have such a diameter that they can facilitate the discharge of moisture. In FIG. 1, a substrate layer comprises any one typically used in the polymerization for preparing super absorbent polymers such as a vessel or a belt, and its type is not particularly limited.

The thermal polymerization and the UV-induced polymerization of the monomer composition have no limitation as to their condition and typical methods can be employed. For example, the polymerization can be carried out at a temperature of about 25 to 99°C for about 10 seconds to 30 minutes. Specifically, the thermal polymerization can be classified into a redox polymerization carried out at a temperature of 25 to 50°C for about 2 to 30 minutes and a thermal polymerization carried out at a temperature of 40 to 90°C for about 2 to 30 minutes. More preferably, in the thermal polymerization, the redox polymerization can be carried out at a temperature of 25 to 40°C for about 5 minutes to 20 minutes and most preferably, at a temperature of 25 to 35°C for about 5 minutes to 10 minutes. More preferably, the thermal polymerization can be carried out at a temperature of 50 to 80°C for about 5 minutes to 20 minutes, and most preferably at a temperature of 60 to 70°C for about 5 minutes to 10 minutes. Meanwhile, the UV-induced polymerization (i.e., the photo-polymerization) is not really affected by temperature so that it can be carried out by irradiating light at a wide range of temperature from 25 to 99°C for about 10 seconds to 5 minutes. More preferably, the UV-induced polymerization (i.e., photo-polymerization) can be carried out by irradiating light at a temperature of 25 to 80°C for about 30 seconds to 5 minutes, and most preferably at a temperature of 35 to 55°C for about 1 minute to 3 minutes. The light intensity of UV irradiation is about 0.1 to 30 mW/cm₂, preferably 0.5 to 10 mW/cm², more preferably 1 to 5 mW/cm², and most preferably 2 to 3 mW/cm². For UV irradiation, one can use any light source and any wavelength that are well-known in the art.

Furthermore, in the manner of carrying out the thermal polymerization or the UV-induced polymerization with the monomer composition, polymerization apparatus as used is not particularly limited. For example, in the present invention, the monomer composition can be introduced onto a flat surface such as a continuously moving conveyer belt to be polymerized in a continuous or discontinuous manner. Preferably, the polymerization of the water-soluble, ethylenic unsaturated monomers may be conducted in an aqueous solution. Therefore, the monomer composition may be an aqueous solution.

In the present invention, any monomers typically available in the production of super absorbent polymers can be used for the water-soluble, ethylenic unsaturated monomers with no limitation. Roughly speaking, one can use at least one selected from the group consisting of anionic monomers and the salts thereof, nonionic hydrophilic-containing monomers, and unsaturated monomers containing an amino group and their quaternized compounds.

Specifically, as the water-soluble, ethylenic unsaturated monomer, one can preferably use at least one selected from the group consisting of anionic monomers such as acrylic acid, methacrylic acid, anhydrous maleic acid, fumaric acid, crotonic acid, itaconic acid, 2-acryloylethane sulfonic acid, 2-methacryloyl ethane sulfonic acid, 2-(meth)acryloyl propane sulfonic acid, and 2-(meth)acrylamide-2-methyl propane sulfonic acid, and the salts thereof; nonionic hydrophilic-containing monomers such as (meth)acrylamide, N-substituted (meth)acrylate, 2-hydroxyethyl(meth)acrylate, 2-hydroxypropyl(meth)acrylate, methoxy polyethyleneglycol(meth)acrylate, and polyethyleneglycol(meth)acrylate; and unsaturated monomers containing an amino group such as (N,N)-dimethylaminoethyl(meth)acrylate and (N,N)-dimethylaminopropyl(meth)acrylamide, and their quaternized compounds.

More preferably, as the water-soluble, ethylenic unsaturated monomer, one can use acrylic acid or a salt thereof, which are advantageous in excellent properties of the polymers.

The concentration of the water-soluble, ethylenic unsaturated monomers in the monomer composition can be properly chosen and employed, taking the polymerization time, the reaction conditions, and the like into account. Preferably, the monomers can be used in an amount of about 20 to 60% by weight, more preferably about 20 to 50% by weight, even more preferably about 30 to 50% by weight, and most preferably about 40 to 50% by weight. If the concentration of the water-soluble, ethylenic unsaturated monomers is lower than about 20% by weight, the yield is so low, making the process economically infeasible. If the concentration is higher than about 60% by weight, it can disadvantageously lead to deterioration of the properties and a decrease in the solubility of the monomers.

Moreover, the monomer composition according to the present invention may further include a crosslinker or an initiator.

Available types of the crosslinker comprise a crosslinker having a water-soluble substituent group of an ethylenic unsaturated monomer and/or at least one functional group capable of reacting with a water-soluble substituent group of an ethylenic unsaturated monomer and further having at least one ethylenic unsaturated group; and a crosslinker having an water-soluble substituent group of the ethylenic unsaturated monomer and/or at least two functional groups capable of reacting with a water soluble substituent group generated from hydrolysis of a vinyl monomer. As the crosslinker having at least two ethylenic unsaturated groups, one can use a bis-acrylamide of C8 to C12, bismethacrylamide, poly(meth)acrylate of a polyol of C2 to C10, and poly(meth)allylether of a polyol of C2 to C10, and the like; and one can use at least one selected from the group consisting of N,N'-methylenebis(meth)acrylate, ethyleneoxy(meth)acrylate, polyethyleneoxy(meth)acrylate, propyleneoxy(meth)acrylate, glycerine diacrylate, glycerine triacrylate, trimethylolpropane triacrylate, triallylamine, triarylcyanurate, triallylisocianate, polyethyleneglycol, diethyleneglycol and propyleneglycol.

The crosslinker is used in an amount of about 0.01 to 0.5% by weight, preferably about 0.03 to 0.4% by weight, more preferably about 0.5 to 0.3% by weight, and most preferably about 0.1 to 0.3% by weight.

Different initiators can be used depending on whether the polymerization is a thermal polymerization or a UV-induced photo-polymerization. As an initiator for the thermal polymerization, one can use at least one selected from the group consisting of azo initiators, peroxide initiators, redox initiators, and organo-halogenide initiators. As a photoinitiator, one can use at least one selected from the group consisting of acetophenone, benzoin, benzophenone, benzyl, and their derivatives including acetophenone derivatives such as diethoxy acetophenone, 2-hydroxy-2-methyl-1-phenylpropane-1-on, benzyl dimethyl tar, 4-(2-hydroxy ethoxy)phenyl-(2-hydroxy)-2-propyl ketone, 1-hydroxycyclohexylphenylketone and the like; benzoin alkyl ethers such as benzoin methyl ether, benzoyl ethyl ether, benzoin isopropyl ether, benzoin isobutyl ether and the like; benzophenone derivatives such as o-benzoyl methyl benzoate, 4-phenyl benzophenone, 4-benzoyl-4'-methyl-diphenyl sulfide, (4-benzoyl benzyl)trimethyl ammonium chloride and the like; thioxanthone compounds; acyl phosphine oxide derivatives such as bis(2,4,6-trimethylbenzoyl)-phenyl phosphine oxide, diphenyl(2,4,6-trimethylbenzoyl)-phosphine oxide, and the like; and azo compounds such as 2-hydroxy methyl propionitrile, 2,2'-{azobis(2-methyl-N-[1,1'-bis(hydroxymethyl)-2-hydroxyethyl)propionamide], and the like.

The initiator can be used in an amount of 0.01 to 1.0% by weight, preferably 0.01 to 0.5% by weight, more preferably 0.01 to 0.3% by weight, and most preferably 0.014 to 0.1% by weight with respect to the total monomer composition.

According to an embodiment of the present invention, it can further include drying and grinding the hydrogel polymers obtained from the thermal polymerization or the UV-induced polymerization of the monomer composition. For example, the drying and the grinding can be simultaneously carried out during the polymerization or it can be carried out after the polymerization. What is preferable for an efficient drying is that the hydrogel polymer is grinded to have a certain size (of about 1 to 5cm) and then dried, and a second grinding after such drying is carried out to provide particles with a desired size (for example, of about 150 to 850um)

In this regard, the hydrogel polymers can be used as cut in a certain size prior to the drying process. For example, the hydrogel polymers can be cut in a size of about 0.1cm to 5cm, preferably about 0.2cm to 3cm, more preferably about 0.5cm to 2cm, and most preferably about 0.5cm to 1 cm.

Apparatus for the drying is not particularly limited and for example, the drying can be conducted with Infrared ray irradiation, heat waves, microwaves irradiation, or UV ray irradiation. Moreover, time and temperature for the drying can be properly selected depending on the water content of the polymers resulting from the thermal polymerization or the UV-induced polymerization. Preferably, the drying is carried out at a temperature of about 80 to 200°C for about 20 minutes to 5 hours. More preferably, the hydrogel polymers are dried at a temperature of about 90 to 180°C for about 1 hour to 3 hours, and most preferably at a temperature of about 100 to 150°C for about 1 hour to 2 hours. A drying temperature below about 80°C would have only an insignificant effect of drying, disadvantageously leading to an excessively long drying time. Drying at a temperature exceeding about 200°C would cause a problem of thermal degradation of the super absorbent polymers.

The polymers dried according to the above embodiments are subjected to a grinding, wherein any grinding method available for a polymer grinding can be chosen with no limitation. Preferably, the grinding can be carried out by any grinding apparatus selected from the group consisting of a pin mill, a hammer mill, a screw mill, a roll mill and the like. The average particle size of the resulting super absorbent polymers after the grinding is about 150 to 850µm, preferably about 200 to 600µm, and most preferably about 300 to 500µm.

In the foregoing embodiments, the hydrogel polymers prepared from the thermal or the UV induced polymerization have a water content after the drying ranging from about 2 to 10% by weight, preferably from about 2 to 8% by weight, more preferably from about 2 to 5% by weight, and most preferably about 2 to 3% by weight. In this connection, the water content of the hydrogel polymer refers to the content of the occupying water (i.e., the value obtained by subtracting the weight of the dried polymers from the weight of the hydrogel polymers) with respect to a total weight of the polymer gel.

In accordance with the above embodiments of the present invention, the polymers include micro-paths that can facilitate discharge of moisture or heat from the polymers, making it possible to achieve a more efficient drying.

The super absorbent polymer powder prepared from the above methods can be a porous polymer with numerous micro-paths therein. Accordingly, in the present invention, moisture after the polymerization can be easily eliminated from the super absorbent polymers, and also the polymer can be prepared at such a low temperature that the properties of the resulting super absorbent polymers does not deteriorate. Moreover, since only a minimum level of an additional drying is required, the efficiency of the overall process can be improved.

In particular, the super absorbent polymers of the present invention can show more enhanced properties with both of the centrifugal retention capacity (CRC) and the absorption under pressure (AUP) increased together.

The centrifugal retention capacity can be defined by the amount of the water substantially absorbed by the absorbent polymers after water on their surface being eliminated therefrom when they were allowed to absorb water and then subjected to centrifugation once. Accordingly, the centrifugal retention capacity is an evaluation as to a basic ability of the absorbent polymer to absorb moisture under no additional external force. By contrast, the AUP means an ability of the absorbent polymer to absorb water when the absorbent polymer is under a constant pressure. Therefore, the quality of the absorbent polymer can be determined by how high the centrifugal retention capacity and the AUP are, and typically the super absorbent polymer can be evaluated to have more excellent properties as both the centrifugal retention capacity and the AUP are getting higher.

Typically, however, the centrifugal retention capacity and the AUP are inversely proportional to each other so that improving both of them together is hard to achieve. This is because the centrifugal retention capacity relates to an ability of the super absorbent polymers to easily absorb water between the molecular structures thereof, while the AUP is associated with an ability of the super absorbent polymer to absorb water well with expanding its volume even under an external force thanks to the strong and dense molecular structure thereof.

However, the super absorbent polymers obtained by the process of the present invention have a high degree of polymerization and a strong molecular structure, and during the polymerization for the preparation, moisture or the like is effectively discharged as well. Therefore, it is possible to improve both of the centrifugal retention capacity and the AUP together to some extent.

As described hereinabove, the preparation process for the superabsorbent polymers of the present invention enables more efficient production of the super absorbent polymers with excellent properties, and thereby makes all the difference to the field related with the production of super absorbent polymers

### ADVANTAGEOUS EFFECTS OF THE INVENTION

According to the present invention, paths for effectively removing the residual moisture can be generated more efficiently, facilitating the drying of the hydrogel polymers. As a result, the efficiency of the overall process can increase, contributing to the energy saving effect. In particular, the present invention can lower the temperature of the polymers and thus make the resulting super absorbent polymers exhibit excellent properties, thereby enhancing the quality of the polymers. Furthermore, the present invention makes it possible to improve the centrifugal retention capacity and the AUP together so that it has an effect of providing a super absorbent polymer with more enhanced properties.

### BRIEF DESCRIPTION OF THE DRAWINGS

FIG. 1 is a view schematically illustrating the formation of micro-paths in the polymer via the polymerization in the preparation process for super absorbent polymers according to the present invention.
FIG. 2 is a graph showing a comparison of interrelation between the centrifugal retention capacity (CRC) and the AUP in the examples and the comparative examples.

### <Brief description as to the reference numerals of the drawings>

| | |
|---|---|
| 1: substrate layer | 2: micro-path |
| 3: solid polymer layer | 4: polymer layer of water containing amount |

### DETAILS FOR PRACTICING THE INVENTION

Hereinafter, actions and effects of the present invention will be explained in further detail with reference to the specific examples of the invention. However, it should be understood that these examples are merely illustrative of the present invention and the scope of the present invention shall not be determined by them.

### Example 1

100g of acrylic acid, 1g of nanoclay particles (laponite: trade name XLG, ROCKWOOD SPECIALTIES CO. LTD) with a diameter of 30nm as a non-reactive fine particle, 0.1g of polyethylene glycol diacrylate as a crosslinker, 0.033g of diphenyl(2,4,6-trimethylbenzoyl)-phosphine oxide as an initiator, 38.9g of caustic soda (NaOH), and 103.9g of water were mixed to give an aqueous solution of a monomer composition with a monomer concentration of about 50% by weight.

Then, the aqueous solution of the monomer composition was introduced onto a continuously moving conveyor belt and irradiated with UV rays (irradiation amount: 2mW/cm²) at 50°C for 2 minutes to carry out a UV-induced polymerization.

The hydrogel polymer resulting from the UV-induced polymerization was cut in a size of 5mm x 5mm, dried in an heat wave dryer at 150°C for 5 hours, and grinded by using a pin-mill grinder, and then the resulting product was sieved to be prepared as a super absorbent polymer with a particle size of 150 - 850µm.

Then, the super absorbent polymer was subjected to surface crosslinking by using a 3 wt.% solution of ethylene glycol diglycidyl ether, reacting at 120°C for 1 hour, and then was grinded and sieved to give a surface-treated sample of the super absorbent polymer with a particle size of 150 - 180µm.

### Example 2

A polymer was prepared with the same method as Example 1 except for using nanoclay particles (laponite: trade name XLS, ROCKWOOD SPECIALTIES CO. LTD) with a diameter of 30nm as a non-reactive fine particle.

### Example 3

A polymer was prepared with the same method as Example 1 except for using nanoclay particles (montmorilonite: trade name Na-MMT) with a diameter of 200nm as a non-reactive fine particle.

### Example 4

A polymer was prepared with the same method as Example 1 except for using polymer particles with a diameter of about 10 to 50µm obtained after the polymerization, the drying, and the grinding, and prior to a surface treatment as a non-reactive fine particle.

### Example 5

A polymer was prepared with the same method as Example 1 except for using polymer particles with a diameter of about 10 to 50µm obtained from the polymerization, the drying, and the grinding and then subjected to the surface treatment as a non-reactive fine particle.

### Example 6

A polymer was prepared with the same method as Example 1 except for using spherical colloidal silica particles with a diameter of about 100µm as a non-reactive fine particle.

### Comparative Example 1

A polymer was prepared with the same method as Example 1 except for using spherical colloidal silica particles with a diameter of about 12nm as a non-reactive fine particle.

### Comparative Example 2

A polymer was prepared with the same method as Example 1 except for using mica particles (ME100, CO-OP Chemical co. ltd) with a diameter of about 2mm that were obtained after a polymerization, a drying, and a grinding, and prior to a surface treatment as a non-reactive fine particle.

### Comparative Example 3

A polymer was prepared with the same method as Example 1 except for not using any non-reactive fine particle.

### Test Examples: Evaluation of water content and properties of super absorbent polymers

### Test Example 1: Evaluation of water content

For each of the absorbent polymers obtained from the above examples and comparative examples, the water content was measured in accordance with the following method and the results are shown in Table 1:
1g of each of the absorbent polymers was dried in a dryer using IR (infrared ray) at 180°C for 40 minutes and its water content was measured.

### Test Example 2: Evaluation for Polymer properties

The following tests were conducted in order to evaluate the properties of the super absorbent polymers of the examples and the polymers of the comparative examples.

Measurement of the properties was carried out in the manner as recommended by EDANA.

### (1) Centrifugal Retention Capacity (CRC)

After 0.2g of the super absorbent polymer with a size of about 150 to 850µm was placed into a tea bag, it was subjected to a precipitation absorption in a 0.9% saline solution for 30 minutes and dehydrated with using a centrifugal force of 250G (gravity) for 3 minutes, and then the amount of the saline solution as absorbed therein was measured.

### (2) Water soluble component

After 1g of the super absorbent polymer with a size of about 150 to 850µm was placed in a 250mL Erlenmeyer flask, it was eluted with a 200mL of a 0.9% saline solution for 18 hours. Then, the gel portion of the super absorbent polymer was filtered out with using a filter paper (No. 4) and the portion as dissolved in the 0.9% saline solution was taken and subjected to a content analysis, from which the weight ratio of the eluted absorbent polymer with respect to the weight of the super absorbent polymer prior to the elution was determined and thereby the content of the water soluble component was measured. (the measurement was conducted in the same manner as set forth in EDANA 270.2)

### (3) AUP (Absorption Under Pressure)

It was measured in accordance with the method as set forth in EDANA WSP 242.2.

| | Properties before surface crosslinking | | Properties after surface crosslinking | | |
|---|---|---|---|---|---|
| | CRC (g/g) | Water soluble component (wt.%) | CRC (g/g) | Water soluble component (wt.%) | AUP (g/g) |
| Example 1 | 45.6 | 19.8 | 40.9 | 15.1 | 25.3 |
| Example 2 | 44.8 | 18.2 | 40.5 | 14.3 | 24.1 |
| Example 3 | 42.2 | 15.6 | 37.8 | 12.0 | 26.6 |
| Example 4 | 49.8 | 21.6 | 44.7 | 17.5 | 22.5 |
| Example 5 | 51.2 | 23.4 | 45.3 | 19.0 | 23.6 |
| Example 6 | 46.5 | 17.9 | 41.2 | 13.2 | 24.3 |
| Comparative Example 1 | 42.3 | 20.8 | 38.6 | 16.8 | 22.9 |
| Comparative Example 2 | 40.5 | 17.1 | 36.5 | 12.1 | 24.3 |
| Comparative Example 3 | 51.6 | 34.8 | 43.6 | 25.3 | 21.0 |

Based on the above results, interrelations between the centrifugal retention capacity and the AUP of the examples and the comparative examples were compared and the results are shown in FIG. 2.

The centrifugal retention capacity of the super absorbent polymer relates to evaluation as to the capability of absorbing moisture and is associated with a basic performance of the super absorbent polymer. By contrast, the AUP of the super absorbent polymers relates to evaluation as to the capability of absorbing moisture under a constant pressure, and the water soluble components is directed to the amount of the components that can dissolved in water among the super absorbent polymers, e.g., the content of low molecular weight polymerization component.

Generally speaking, as the centrifugal retention capacity and AUP increase, the super absorbent polymer can be evaluated to have more excellent properties. In addition, when the super absorbent polymer is applied in personal care products such as diapers, its users would feel less discomfort caused by wetness or the like as the super absorbent polymer comprises a smaller amount of water soluble component, thereby being considered to have more excellent the properties.

Typically, however, it was known that as the centrifugal retention capacity is getting higher, the AUP decreases but the water soluble content increases, and this has presented difficulties in enhancing the overall properties of the super absorbent polymers.

Referring to Table 1 and FIG. 2, it is confirmed that the super absorbent polymers of Examples 1 to 6 are superior in the overall properties.

More specifically, it is found that the super absorbent polymers of Examples 1 to 6 are superior to the super absorbent polymers of Comparative Examples 1 to 3 in at least one of the properties of the centrifugal retention capacity, the AUP, and the content of the water soluble component, and they also maintain an equal or higher level for the other property (or properties).

By contrast, in case of Comparative Examples 1 to 3, not using non-reactive fine particle or using the non-reactive fine particle with a size falling outside the foregoing range leads to generally an inferior result to the present invention and cannot bring forth the results of simultaneously enhancing both of the CRC and the AUP.

Referring to FIG. 2, it is confirmed that in terms of the centrifugal retention capacity in comparison with the AUP, the super absorbent polymers of Examples 1 to 6 show the properties equal to or better than those of Comparative Examples 1 to 3, exhibiting an effect of improving the properties. These results confirm that the present invention can make a significant improvement in the properties of the super absorbent polymers by increasing both of the CRC and the AUP together. Furthermore, besides the effect of improving the properties, according to the , present invention, paths for effectively eliminating residual moisture can be generated efficiently during the polymerization, facilitating the drying of the hydrogel polymer and making it possible to produce the polymers very economically.

## Claims

1. A process for preparing super absorbent polymers, which comprises the steps of:
forming a monomer composition comprising water-soluble ethylenic unsaturated monomers and non-reactive fine particles with a diameter of 20nm to 1 mm; and
subjecting the monomer composition to a thermal polymerization or a UV-induced polymerization.

2. The process for preparing super absorbent polymers according to Claim 1, wherein the non-reactive fine particles comprise nanoclay particles, polymer particles, or inorganic particles.

3. The process for preparing super absorbent polymers according to Claim 1, wherein the non-reactive fine particles are included in an amount of 0.1 to 10% by weight with respect to the total monomer composition.

4. The process for preparing super absorbent polymers according to Claim 2, wherein the nanoclay particles are at least one selected from the group consisting of montmorilonite, saponite, nontronite, laponite, beidellite, hectorite, vermiculite, magadiite, kaolin, serpentine, and mica.

5. The process for preparing super absorbent polymers according to Claim 2, wherein the polymer particles are at least one selected from the group consisting of a fine particle obtained after the steps of a polymerization, a drying, a grinding, and distribution; a fine particle obtained from surface crosslinking carried out after grinding polymers; and a fine particle obtained from a treatment of a grinding and distribution carried out after surface crosslinking.

6. The process for preparing super absorbent polymers according to Claim 2, wherein the inorganic particles are at least one selected from the group consisting of silicon oxide, aluminum oxide, magnesium oxide and their derivatives.

7. The process for preparing super absorbent polymers according to Claim 1, wherein the monomer composition further comprises a crosslinker or an initiator.

8. The process for preparing super absorbent polymers according to Claim 1, wherein the water-soluble, ethylenic unsaturated monomers are at least one selected from the group consisting of anionic monomers including acrylic acid, methacrylic acid, anhydrous maleic acid, fumaric acid, crotonic acid, itaconic acid, 2-acryloylethane sulfonic acid, 2-methacryloylethanesulfonic acid, 2-(meth)acryloylpropanesulfonic acid and 2-(meth)acrylamide-2-methyl propane sulfonic acid, and salts thereof; nonionic hydrophilic-containing monomers including (meth)acrylamide, N-substituted (meth)acrylate, 2-hydroxyethyl(meth)acrylate, 2-hydroxypropyl(meth)acrylate, methoxy polyethyleneglycol(meth)acrylate and polyethyleneglycol(meth)acrylate; and unsaturated monomers containing an amino group including (N,N)-dimethylaminoethyl(meth)acrylate and (N,N)-dimethylaminopropyl(meth)acrylamide and their quaternized compounds.

9. The process for preparing super absorbent polymers according to Claim 8, wherein the water-soluble, ethylenic unsaturated monomers are acrylic acid or a salt thereof.

10. The process for preparing super absorbent polymers according to Claim 1, wherein the concentration of the water-soluble, ethylenic unsaturated monomers is 20 to 60% by weight.

11. The process for preparing super absorbent polymers according to Claim 7, wherein the crosslinker is at least one selected from the group consisting of a crosslinker with a water-soluble substituent group of an ethylenic unsaturated monomer, a crosslinker with at least one functional group capable of reacting with a water-soluble substituent group of an ethylenic unsaturated monomer and at least one ethylenic unsaturated group, or a crosslinker with mixed substituent groups thereof; and a crosslinker with a water-soluble substituent group of an ethylenic unsaturated monomer, a crosslinker with at least two functional groups capable of reacting with a water soluble substituent group generated from hydrolysis of a vinyl monomer, or a crosslinker with mixed substituent groups thereof.

12. The process for preparing super absorbent polymers according to Claim 7, wherein the initiator is at least one selected from the group consisting of azo initiators, peroxide initiators, redox initiators, organo-halogenide initiators, acetophenone, benzoin, benzophenone, benzyl and their derivatives.

13. The process for preparing super absorbent polymers according to Claim 1, wherein the thermal polymerization is carried out either in a manner of a redox polymerization conducted at a temperature of 25 to 50°C for 2 to 30 minutes or in a manner of a thermal polymerization conducted at a temperature of 40 to 90°C for 2 to 30 minutes, and
the UV-induced polymerization is carried out by irradiating light at a temperature of 25 to 99°C for 10 seconds to 5 minutes.

14. The process for preparing super absorbent polymers according to Claim 1, wherein it further comprises drying and grinding a hydrogel polymer obtained after the thermal polymerization or the UV-induced polymerization.

15. The process for preparing super absorbent polymers according to Claim 14, wherein the drying is carried out through infrared ray irradiation, heat waves, microwaves irradiation, or UV ray irradiation.

16. The process for preparing super absorbent polymers according to Claim 14, wherein the grinding can be carried out with at least one grinding apparatus selected from the group consisting of a pin mill, a hammer mill, a screw mill, and a roll mill.

17. The process for preparing super absorbent polymers according to Claim 14, wherein a powdery polymer having an average particle diameter of 150 to 850µm is formed through the drying and the grinding.

18. The process for preparing super absorbent polymers according to Claim 17, wherein the water content after the drying of the polymer obtained after the drying and grinding is 2 to 10% by weight.
